# EUROPÄISCHE PATENTANMELDUNG

(11) **EP 2 489 257 A2**
(43) Veröffentlichungstag der Anmeldung: **22.08.2012**
(21) Anmeldenummer: 12001056.6
(22) Anmeldetag: 17.02.2012
(51) Int. Cl.: A01K 3/00

(54) **Artenschutzzaun**

(30) Priorität: 17.02.2011 DE 202011002865 U
(71) Anmelder: Zieger, Stefan, 68794 Oberhausen-Rheinhausen (DE)
(72) Erfinder: Zieger, Stefan, 68794 Oberhausen-Rheinhausen (DE)
(74) Vertreter: Straub, Bernd

(57) **Zusammenfassung**

Die vorliegende Erfindung betrifft einen Artenschutzzaun (1.1) wie in Fig. 1 dargestellt, mit oder ohne Amphibien-Leitsystem (13). Der Artenschutzzaun (1.1) weist nur vertikale Sperrstäbe (1.3) auf, wobei bevorzugt zwei Sperrstäben (1.3) mit einem Abstand (a), der im Bereich von 35 bis 45 mm liegt, bevorzugt im Bereich von 40 bis 45 cm liegt, voneinander beanstandet sind.

## Beschreibung

Die nachfolgende Erfindung bezieht sich auf einen Artenschutzzaun, insbesondere auf ein Zaunsystem, das dem Schutz von Wildkatze, Bieber, Otter, Feldhamster oder Luchs dienen kann.

Aus dem Stand der Technik sind bereits Zaunsysteme zum Schutze von Wildkatze, Bieber, Otter, Feldhamster oder Luchs bekannt. Herkömmliche bekannte Wild-Schutzzaunsysteme, also Zaunsysteme, die Wild schützen, weisen horizontale wie auch vertikale Drähte auf oder stellen 4-Eck/6-Eck-Drahtgeflechte dar. Der Nachteil dieser Wildschutzzäune bzgl. der genannten und geschützten Wildarten liegt darin, dass diese bekannten Zäune allesamt entweder durchschlüpft oder überklettert werden.

Bisherige Zaunsysteme zum Wildkatzenschutz stoßen auf Widerstand bzgl. der Landschaftsästhetik. Die geforderte Funktionalität hinsichtlich der Schutzwirkung ist bisher schwer nachzuweisen (siehe Foto A60 in der Eifel).

Ein weiterer großer Nachteil besteht darin, dass Tiere nach Möglichkeit einen solchen Zaun erklettern, was zu erhöhtem Energieverlust der Tiere und damit zu einer entsprechend großen Verweildauer am Zaun führt. Die erhöhte Verweildauer führt wiederum zu einem so genannten Prädatorendruck, denn auch die Wildkatze oder der Bieber, Otter, Feldhamster oder Luchs hat Fressfeinde.

Ausgehend von diesem Stand der Technik liegt der vorliegenden Erfindung die Aufgabe zu Grunde ein verbessertes Wild-Schutzzaunsystem zu schaffen, das die Verweildauer der zu schützenden Arten, insbesondere von Wildtieren, Zaun gering hält, leicht aufzustellen und ästhetisch ist.

Diese Aufgabe wird durch den Artenschutzzaun mit den Merkmalen des unabhängigen Anspruchs 1 gelöst. Bevorzugte Weiterbildungen werden durch die Unteransprüche beschrieben.

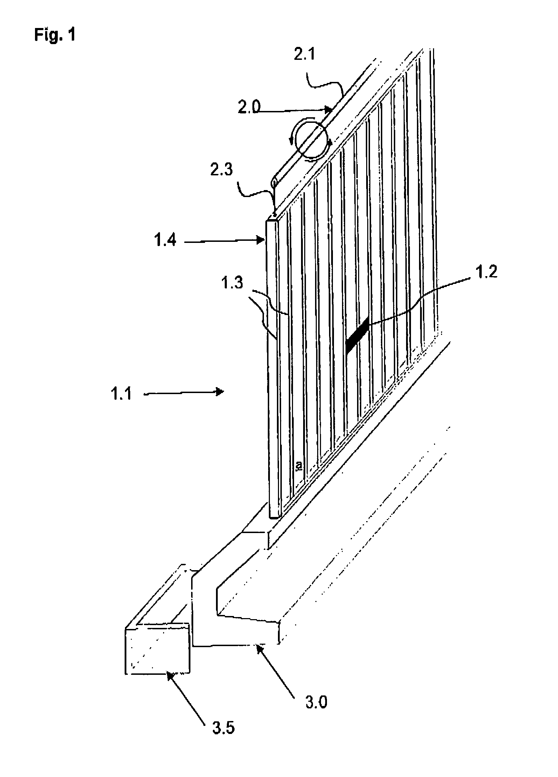

Eine Ausführungsform eines erfindungsgemäßen Artenschutzzauns Ist ausgebildet, wie in Fig. 1 dargestellt, mit oder ohne Amphibien-Leitsystem. Vorteilhaft besteht er nur aus vertikalen Sperrstäben, die das Hochklettern von Tieren und somit das ungewollte Überklettern des Zaunes durch Wildtiere wie Wildkatze, Bieber, Otter, Feldhamster oder Luchs nicht erlauben.

Das Hindurchzwängen wird vorteilhaft ebenfalls unterbunden, da zwei Sperrstäbe mit einem Abstand voneinander beabstandet sind, der im Bereich von 35 bis 45 mm liegt, bevorzugt im Bereich von 40 bis 45 cm. Und der insofern enger ist, als es die Köpfe der Tiere sind.

Um bestimmte Tiere vom Zaun abzuhalten kann der Artenschutzzaun mit Dufttaschen ausgestattet sein.

Die vertikalen Sperrstäbe können in Rund-, Quadrat-, Rechteck-, Dreieck-, oder Ovalform vorliegen oder bei Winkelform gleichschenklig oder ungleichschenklig in einem geforderten Abstand untereinander aufgebaut werden.

Der Artenschutzzaun kann auf einem Amphibien-Leitsystem aufgebaut sein, das eine Mehrzahl von aneinander angereihten Leitsteinen aufweist. Die Befestigung kann durch Verschraubungen, Verklebungen, Verdübelungen mit oder ohne Muffen erfolgen. So erfüllt die Zaunvorrichtung tatsächlich einen umfassenden Artenschutz, nicht nur für einige Wildtiere, sondern auch für Amphibien.

Die Leitsteine, die das Amphibien-Leitsystem bilden, können aus Beton, Polymerbeton. Kunststoffen oder Metallen oder Kombinationen der vorstehenden Materialien geschaffen sein. Sie können ideal zur gleichmäßigen Verfugung mit Abstandhalter voneinander beabstandet sein, die aus Beton, Polymorbeton, Kunststoffen oder Metallen oder Kombinationen der vorstehenden Materialien hergestellt sind. Bevorzugt liegt zumindest an einer Stirnseite eines Leitsteines zumindest ein Abstandhalter vor.

Weiter kann in einer nächsten Ausführungsform des erfindungsgemäßen Gegenstandes an zumindest einer Längsseite des Leitsteins entlang dessen Länge, bevorzugt benachbart zu einer an der Erdoberfläche liegenden Kante des Leitsteins ein Pflanzenwachstumshinderungsvlies bevorratet und ausziehbar angeordnet sein, das nach Ausrollen im Erdreich befestigbar ist und den Bewuchs an dem Zaun hindert.

Die Dufttaschen können an den Sperrstäben und/oder an dem Rahmen befestigt, insbesondere verschraubt oder verschweißt, oder lösbar befestigt, bevorzugt eingehängt sein. Sie sind mit Duftstoffträgern bestückbar, die abschreckende Duftstoffe für vorbestimmte Tierarten aufweisen.

Ferner kann der Artenschutzzaun, ungeachtet einer Anordnung auf dem Amphibien-Leitsystem, eine Greifvogelaufsitzstopp-Vorrichtung, auf dem Artenschulzzaun angeordnet sein, die ein als eine Aufsitzfläche für Vögel gestaltetes, auf dem Artenschutzzaun mittels einer entsprechenden Anzahl an Halterungen um seine Längsachse drehbar gelagertes Element aufweist.

Das drehbare Element kann ein Rundrohr oder ein Rohr mit auch dreieckigem-, ovalem-, quadratischem oder rechteckigem Querschnitt sein. Die Längsachse kann durch ein Spannseil, eine Kette, einen Stab gebildet werden. Die Anordnung verhindert zielsicher das Aufsitzen von Vögeln, die am Zaun Beute machen wollen.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung. Es zeigt:
- **Fig. 1**: eine perspektivische Ansicht eines erfindungsgemäßen Ar ten-Schutzzauns,
- **Fig. 2a bis 2f**: perspektivische Ansichten des Details "GreifvogelAufsitzstopp" des erfindungsgemäßen Artenschutzzauns,
- **Fig. 3**: eine perspektivische Ansicht des Details "Leitschutzsystem für Amphibien"
- **Fig. 4a, b**: Seitenschnittansichten des Leitschutzsystems für Amphibien
- **Fig. 4c, d**: Schematische Seitenansichten des Details Abstandshalter an den Gegenständen aus Fig. 4a, 4b
- **Fig. 4e**: Fugenquerschnitt A,
- **Fig. 5a,5b**: Seitenansicht eines Tier-Rettungsdurchschlupfs im Artenschutzzaun,
- **Fig. 5c,5d**: Frontansichten einer Sicherungsvorrichtung des Gegenstands aus Fig. 5a,5b.

**Figur 1** zeigt einen erfindungsgemäßen Artenschutzzaun 1.1, der ein Zaunsystem von beispielsweise 20 bis 30 km Länge bilden kann, wenn er-wie dem fertigungstechnisch gebildeten Fachmann unzweifelhaft klar ist - durch aneinander Reihen einer Vielzahl der gezeigten Elemente des Artenschutzzauns 1.1 geschaffen werden kann.

Ein derartiger erfindungsgemäßer Artenschutzzaun 1.1 dient hauptsächlich zum Schutze von Wildkatze, Bieber, Otter, Feldhamster oder Luchs; es überkommt die Nachteile der bekannten Wildschutzzaun-Systeme, die horizontale und vertikale Drähte aufweisen oder 4-Eck/ 6-Eck Drahtgeflechte dar stellen, und die nachteilig überklettert werden können, da es, wie Fig. 1 zeigt, die relevante Schutzfläche und -höhe ausschließlich durch senkrechte (in Bezug zum Boden), also vertikale (in Bezug zum Boden) Sperrstäbe bildet. Diese können ein rundes, quadratisches, rechteckiges (siehe Bezugszeichen 1.3) ovales oder dreieckiges Querschnittsprofil haben, oder, wie der Volksmund sagt, sie können "rund, quadratisch, rechteckig, oval oder dreieckig sein". Sie können ferner aus Metall, Kunststoffen, Holz, Kohlenfaserstoffen, Glasfaserverbundstoffen, Polymeren, Blechen, Legierungen sein bzw. bestehen.

Die Sperrstäbe 1.3 werden ringsum mit einem Einfassungsrahmen 1.4 versehen. Grundsätzlich können die vertikalen Sperrstäbe 1.3, um die Einrahmung zu bilden, durch obere und untere Querstabe, die ebenfalls ein rundes, quadratisches, rechteckiges ovales oder dreieckiges Querschnittsprofil haben können, begrenzt sein.

Der Artenschutzzaun 1.1 kann ferner auch mit Winkeleisen, gleichschenklig oder ungleichschenklig, aufgebaut sein. Die Winkeleisen 1.4, siehe Fig. 1, könnten entsprechend auch den Rahmen 1.4 des Artenschutzzauns 1.1 bilden oder mit bilden.

Grundsätzlich können die vertikalen Sperrstäbe 1.3 auch durch andere Querstäbe, die ebenfalls ein rundes, quadratisches, rechteckiges ovales oder dreieckiges Querschnittsprofil haben, begrenzt sein.

Diese vertikal stehenden Sperrstäbe 1.3 stehen in dem Abstand zueinander, bei dem es den genannten Tierarten unmöglich ist hindurchzugehen.

Es wird vorliegend vorgeschlagen, dass die Beabstandung a zwischen zwei Sperrstäben 1.3 im Bereich von 35 bis 45 mm, bevorzugt im Bereich von 40 bis 45 cm liegt. Dieser Wert ergibt sich sinnvoll, da die vertikalen Sperrstäbe 1.3 die eingangs genannten Tiere Wildkatze, Bieber, Otter, Feldhamster oder Luchs schützen sollen, deren Kopfgrößen folglich die Beabstandung vorgeben, also die Beabstandungen genau so gewählt sein sollen, dass diese Tiere den Zaun nicht durchdringen und beispielsweise auf eine Straße laufen können - hierbei sei betont, dass der erfindungsgemäße Artenschutzzaun die Tiere eben gerade in ihrer natürlichen Umgebung schützen soll.

Der hier ausgeführte erfindungsgemäße Gegenstand mindert ein Hochklettern am Zaun bzw. schließt ein Hochklettern am Zaun gegebenenfalls zu 100 % aus. Somit entsteht auch keine Verweildauer in der Vertikalen dieser Neuheit. Dies schließt den zuvor genannten Prädatorendruck gänzlich aus. Ein Energieverlust durch Kletterversuche wird ebenso weitestgehend, gegebenenfalls zu 100 %, eliminiert bzw. ausgeschlossen.

Auf ein landschaftsbeeinträchtigendes Blech oder ein Folienband am oberen Zaunbereich, wie es bei Zäunen gemäß Stand der Technik üblich ist und wie es als unästhetisch empfunden wird, kann verzichtet werden.

Ferner können an dem Artenschutzzaun 1.1 sogenannte Dufttaschen 1.2 angebracht sein, die können in oder an dem Artenschutzzaun 1.1, respektive an den Sperrstäben 1.3 oder auch an dem Rahmen 1.4 fest verankert, d. h. verschraubt, verschweißt oder nur eingehängt sein. Diese Dufttaschen 1.2, können für Wildkatze, Luchs, Rehwild ebenso vorhalten werden wie speziell für Hamster, Otter und Bieber. Die Dufttaschen 1.2 können aus Metall, Kunststoffen, Holz, Kohlenfaserstoffe, Glastaserverbundstoffe, Polymere, Bleche, Legierungen gebaut sein und stellen einen Hohlraum (Tasche) dar um die speziell entwickelten abschreckenden Duftstoffe aufzunehmen.

Wird der Artenschutzzaun 1.1 um eine Amphibien- und Kleintierschutzanlage ergänzt, indem die Sperrstäbe 1.3 mit Rahmen 1.4 auf ein Leitsystem aufgebaut werden, so braucht es keine separaten Fundamente. Bereits Fig. 1 zeigt die Anordnung des Artenschutzzauns 1.1 auf einem Amphibienleitsystem: Die für den Schutz erforderliche Zaunhöhe des Artenschutzzauns 1.1 der Erfindung reduziert sich um die Höhe des Leitsystems, das unter den gerahmten Sperrstäben 1.3 angeordnet ist und das hier aus den Leitsteinen 3.0 unter Verwendung von Auflast- und Verbindungsmodulen 3.5 aufgebaut ist.

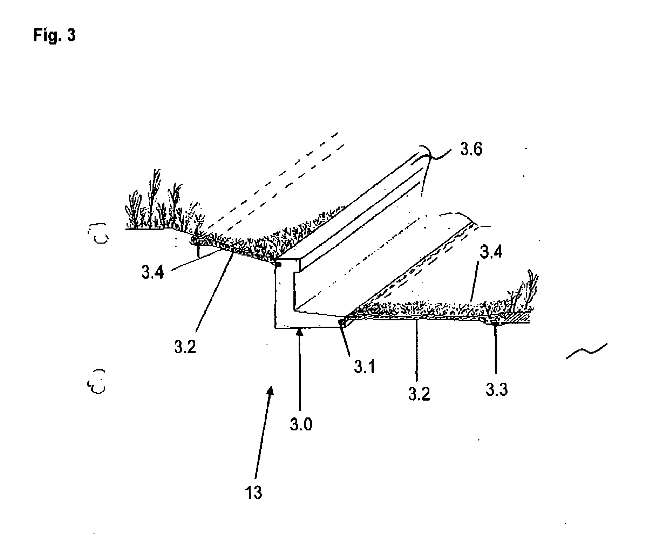

Die Sperrstäbe 1.3 können dann ringsum mit dem Einfassungsrahmen 1.4 versehen und ggfs. Über diesen in das Leitsystem 3.0, siehe etwa **Fig. 3****,** integriert, eingelassen, verdübelt oder verschraubt sein.

Wie ein solches Leitsystem ohne darauf angeordneten Artenschutzzaun 1.1 ausschauen kann, zeigt **Fig. 3****.**

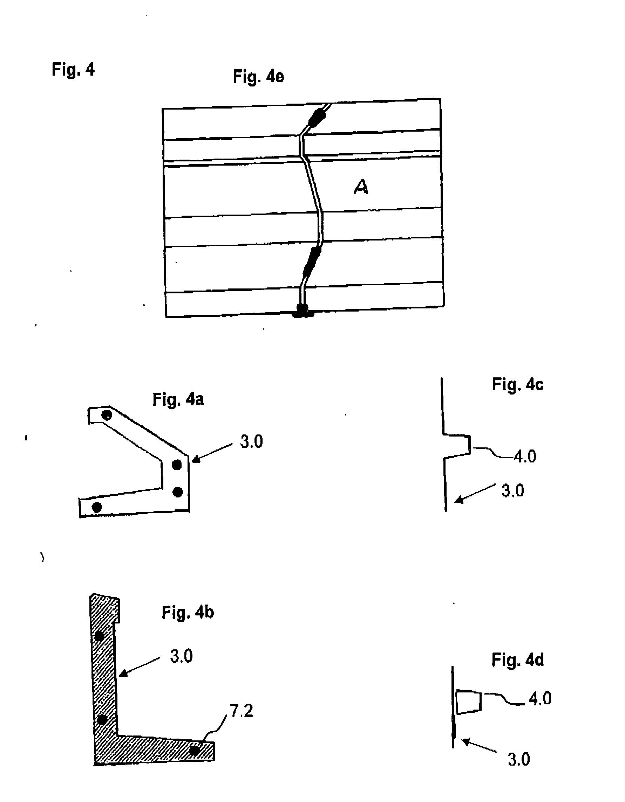

Geeignete Formen für die Leitsteine 3.0 der erfindungsgemäßen Kombination aus Leitsystem und Artenschutzzaun 1.1 sind in **Fig. 4** **a und b** gezeigt: Um eine gute Fugenausbildung durch definierte und auf geeignete Weise verfüllbare Fugen im Stossbereich zweier Leitsteine 3.0 zu schaffen, wird dabel vorgeschlagen, dass die Leitsteine 3.0 aus Beton, Polymerbeton, Kunststoffen oder Metallen jeder Art geschaffene Abstandhalter 4.0 systemintegriert aufweisen können, die sich beim Hintereinander und Aneinander versetzen dieser Leitsteine 3.0 des zuvor beschriebenen Leitsystems bzw. der Bauteile so einfügen, dass von selbst im Querschnitt gleichbleibende Fugenzwischenräume gebildet werden, die sodann normengerecht und damit beständig ausgefugt werden können.

Die Abstandhalter 4.0 werden dazu auf der senkrechten Stirnseite, siehe **Fig. 4a und 4b** eines jeden Bauelementes bzw. Leitsteins 3.0 angeordnet bzw. ggfs bereits bei Fertigung in den Leitstein 3.0 integriert. Fig. 4d zeigt einen Abstandhalter 4.0 lose, in **Fig. 4c** ist er am Leitstein 3.0 durch Verkleben angeordnet. Die "Abstandhalter-Nase" 4.0 kann rund, quadratisch, rechteckig, dreieckig oder aber rautenförmig hinsichtlich ihrer Querschnittsform ausgeführt sein und es wird vorgeschlagen, sie auf die Stirnseite der Leitsteine 3.0, die das Leitsystem bilden, vorzusehen.

Damit werden Baumängel an dem Leitsystem und folglich auch an dem darauf angeordneten Artenschutzzaun 1.1 verhindert und es kann eine Bauwerkszerstörung umgangen werden. Auch das Entstehen einer Pressfuge (Betonteil an Betonteil) die immer zumindest zu Spätschäden führt, wird verhindert.

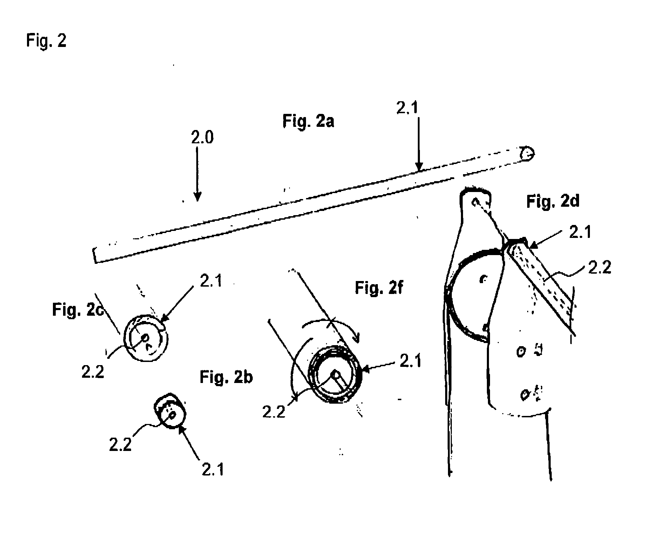

Da keine Fugenabstände beim Versetzen und/oder Verlegen der Bauteile des Leitsystems mehr gemessen werden müssen, ergibt das Einsetzen des Fugenabstandsystems vorteilhaft nach Norm ausgebildete Fugenbereiche, die folglich der Lebensdauer des erfindungsgemäßen Artenschutzzauns 1.1 bzw. dem insgesamt dem aus Artenschutzzaun 1.1, Leitsystem und Greifvogelaufsitzstopp 2.0 gebildeten Artenschutzsystem förderlich ist. Der Greifvogelaufsitzstopp 2.0 ist in **Fig. 1** **und** **2** ausführlich dargelegt:

Zum Leitsystem ohne darauf angeordneten Artenschutzzaun 1.1 wie gezeigt in **Fig. 3****:** Die dort gezeigte Amphibien- und Kleintierschutz-Leitdinrichtungen ergänzen den Artenschutzzaun 1.1 aus **Fig. 1** zu einem Artenschutzgesamtsystem, das nicht nur Wildkatze, Bieber, Otter, Feldhamster oder Luchs, sondern auch Amphibien zugute kommt, gerade in der Ergänzung mit dem nachstehend ausgeführten, den Artenschutzzaun 1.1 zusätzlich optimierenden Greifvogelaufsitzstopp 2.0.

Das Leitsystem, das integriert in den Artenschutzzaun 1.1 eine Ausführungsform einer erfindungsgemäßen Vorrichtung bildet, überkommt Nachteile bekannter sogenannte Amphibien- und Kleintierschutz-Leiteinrichtungen zum Schutze von Amphibien und anderen Kleintieren entlang von Straßen, die dem Baulastträger bzw. den hierfür verantwortlichen Straßenbaumeistereien erheblichen Unterhaltskosten verursachen. Die Verwendung eines verbesserten Leitsystems für Amphibien führt somit insgesamt zu einer Verbesserung der erfindungsgemäßen Vorrichtung und reduziert Kosten und Zeitaufwand bei dessen Erstellung und Wartung. Die Funktionalität hinsichtlich des Artenschutzes wird verbessert, da gerade Frösche, Kröten und Lurche durch die Optimierung nicht über die sonst üppige, vor der Leiteinrichtung ankommende Vegetation überklettern/übersteigen können. Die Verbesserung betrifft die Reduktion der Vegetation an der Leiteinrichtung bzw. an dem Leitsystem und hierin an dem Artenschutzzaun 1.1, in dem ein Pflanzenwachstumshinderungsvlies 3.2, welches zwar wasserdurchlässig ist, aber keine UV-Strahlung hindurch lässt und somit ein üppiges Wachstum von Biomasse/Krautschicht, verhindert, bereits von vornherein an den das Leitsystem bildenden Leitsteinen 3.0 angeordnet ist und beim Einbau ins Erdreich nur ausgerollt werden muss.

Es liegt in dem Leitstein 3.0 in einem Depot 3.1, hier wie bevorzugt an dessen Längs-Kante des Leitsteins 3.0, die an der Erdoberfläche liegt, vor und wird erst nach dem Versetzen bzw. verbauen desselben in der gewünschten Länge aus der sicheren in der Leiteinrichtung 3.0 eingebauten Depot 3.1 herausgezogen. So nimmt dieses Pflanzenwachstumshinderungsvlies 3.2 bzw. die Folie keinen Schaden bei Transport, Entladung oder beim Versetzen) und wird auf einfache Weise mit einem Erdnagel 3.3 im Erdreich fixiert.

Anschließend wird diese Folie mit einem Substrat 3.4 überdeckt. In dem mit dem Pflanzenwachstumshinderungsvlies 3.2 überdeckten Bereich kann es sodann nur geringes Pflanzenwachstum geben. Der Vorteil liegt somit in den geringen Unterhaltungskosten, da die sonstige, mehrmalige Mahd im Jahr sich erübrigt.

So wird verhindert, dass Pflanzenteile über bzw. von oben herunterhängend den zu schützenden Tierarten eine Überkletterhilfe bietet. Dadurch entfällt ebenso eine intensive Unterhaltungsarbeit, nämlich Entfernen dieser Vegetations- und Pflanzentelle.

Um die erfindungsgemäße Vorrichtung "Artenschutzzaun 1.1" zu optimieren, kann sie außer mit der Amphibien- und Kleintierschutz-Leiteinrichtungen 13 auch durch den Greifvogelaufsitzstopp 2.0, beispielhaft gezeigt in **Fig. 1** **und** **2****,** ergänzt werden: Diese Greifvogelaufsitzstopp-Vorrichtung 2.0 überkommt ein oft übersehenes Problem, das oben bereits als "Prädatorendruck" dargelegt wurde: Der Artenschutzzaun 1.1 kann eine so genannte Aufsitz-Warte für Greifvögel (Prädatoren) bilden. Durch den erfindungsgemäß mit dem Artenschutzzaun 1.1 kombinierten Greifvogelaufsitz-Stopp 2.0 wird das Aufsitzen für Vögel auf denselben, unmöglich gemacht, indem sich die Aufsitzfläche als ein um seine eigene Achse drehbares Element 2.1 gestaltet wird, das als Rundrohr 2.1, aber auch mit dreieckigem-, ovalem-, quadratischem oder rechteckigem Querschnitt ausgebildet sein kann, und auf dem Artenschutzzaun 1.1 mittels einer entsprechenden Anzahl an Halterungen 2.3 beabstandet angeordnet ist. Der Fachmann weiß, wie er solche Rollen drehbar lagert.

Möglich ist eine einfache Gestaltung mittels eines Spanndrahtes 2.2, oder eines vergleichbaren, eine Drehachse bereitstellenden Gegenstandes, der bevorzugt wartungsarm und stabil aus Kunststoff, Nylon, Polypropylen oder auch als Stahlseil ausgebildet sein kann. Das drehbare Element 2.1 kann vor der Montage auf den Zaun aufgefädelt sein.

Dieses Aufsitz-Verhinderungsrohr dreht sich somit um die eigene Achse und verhindert so, dass ein Aufsitzen von Vögeln aller Art, vor allem Prädatoren, die welche Feldhamster, Fischotter u. a. "zum Fressen gern haben". Die Rotation bzw. das Drehen um die eigene Achse wird durch das "Auffädeln" auf beispielsweise ein Halteseil 2.2 oder einen Stab, siehe **Fig. 2b bis 2d****,** jederzeit und dauerhaft gewährleistet.

Der Aufbau des Greifvogelaufsitzstopps 2.0 kann direkt mit geringer oder größerer Abstandshöhe der Länge nach über dem Artenschutzzaun 1.1 erfolgen.

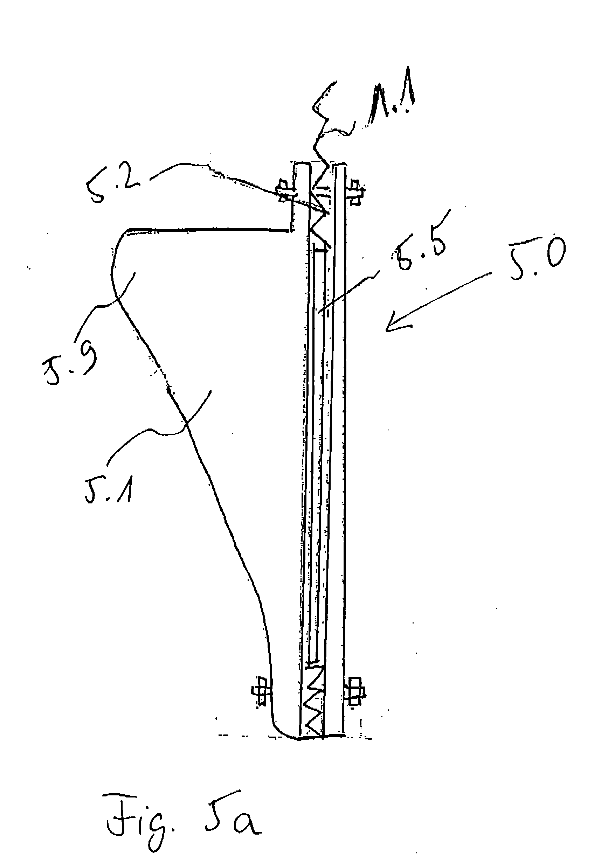

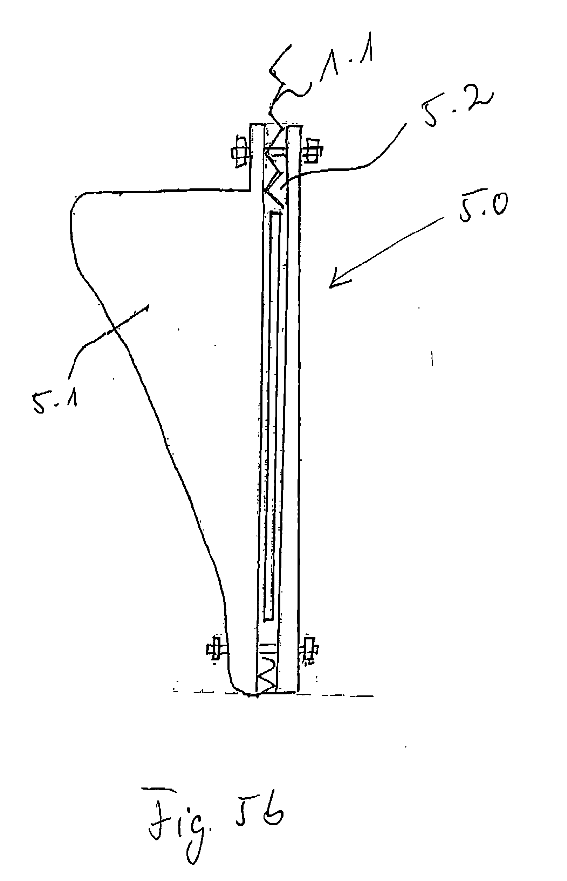

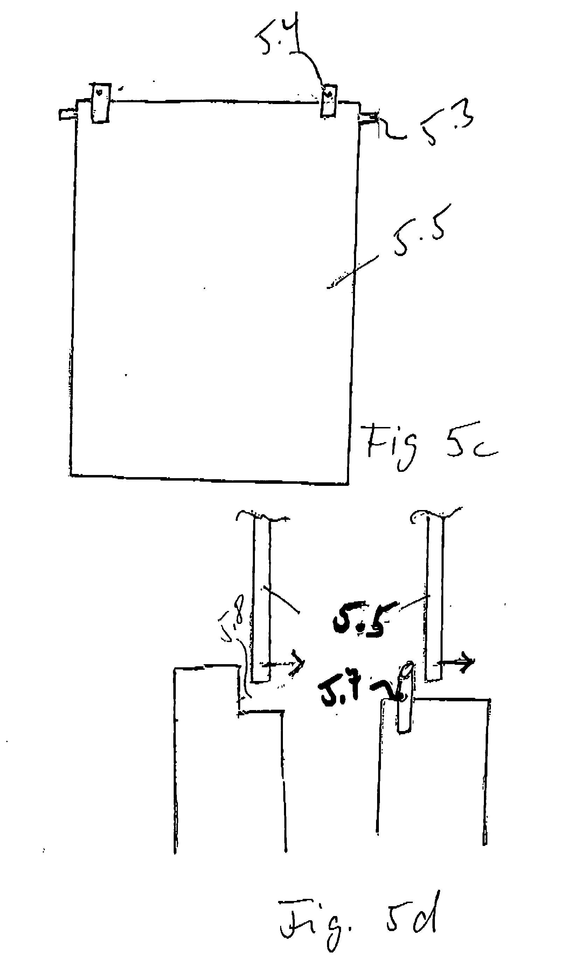

Ferner kann ein Tier-Rettungsdurchschlupf 5.0 in den erfindungsgemäßen Artenschutzzaun 1.1 eingebaut werden, zu sehen in den **Figuren 5a bis 5d****,** die verhindert, dass Tiere, die etwa vom Beginn oder Ende des Artenschutzzaun 1.1 in den Fahrbahnbereich einwandert sind, eben dieses Zaunsystem nicht überwinden oder von der Straßenseite herkommend weg vom Auto in den angrenzenden Wald, Acker, Flurbereich also in den natürlichen Lebensraum flüchten können. Im Gegenteil durch die Sperrwirkung der Zaunanlage von der Straße herkommend werden diese Tiere mit hoher Wahrscheinlichkeit noch dazu bedingt durch den aufkommenden Stress erst recht Opfer des Straßenverkehrs.

Damit diese nicht erfolgt, kann eine Tier-Rettungsdurchschlupf 5.0 in den erfindungsgemäßen Artenschutzzaun 1.1 als natürlicher Durchschlupfe integriert werden. Es wird vorgeschlagen, diesen in den Zaun 1.1 bodennah eingelassen, dass Tiere zwar von der Straßenseite herkommend durchwandern können, jedoch nicht von der Seite in Richtung Straße.

Die Tier-Rettungsdurchschlupf 5.0 kann eine runde, quadratische, rechteckige, rautenförmige oder dreieckige Quershcnittsform aufzeigen, er bildet quasi einen Tunnel und kann in allen derzeitig bekannten Materialien z.B. Kunststoffe, Polymerbetone, Holz, Bleche oder Legierungen, Kohlenfaserstoffe, Polymere, Glasfaserstoffe gefertigt werden sein. Die Durchgangsgröße kann bis zum Durchlaufen von z. B. Schäferhund reichen oder gar größer sein. Die gewählte Form des Tier-Rettungsdurchschlupfs 5.0 kann die Effizienz der Einrichtung erhöhen und sollte immer eine Höhlendurchgangsform, wie gezeigt in **Fig. 5a****,** darstellen, um besser von Tieren gefunden und auch besser durchlaufen zu werden. Die Akzeptanz bei einer Höhlenform ist höher.

Der Einbau des Tier-Rettungsdurchschlupfs 5.0 in den Artenschutzzaun 1.1 erfolgt über den Zaunausschnitt exakt an der Stelle er am sinnvollsten erscheint. Der Einbau erfolgt beispielsweise mittels mitgelieferter Zaunausschnitt-Schablone. Der Artenschutzzaun 1.1 wird an der Schnittstelle im Kragenbereich 5.2 des Tier-Rettungsdurchschlupfs 5.0 mit diesem verbunden und an dem gegenüber liegenden Innenteil verschraubt. So wird ein Durch- oder Unterschlüpfen verhindert und zum anderen die Standsicherheit des Tier-Rettungsdurchschlupfs 5.0 sichergestellt. Am Durchlass bzw. Ausgang des Tier-Rettungsdurchschlupfs 5.0 ist eine Durchgangssperre 5.5 angebracht, die sich nur in Richtung straßenabgewandte Seite bewegen lässt, siehe Pfeile in **Fig. 5d****,** und sich nach jedem Durchtritt eines Tieres wieder automatisch schließt und so ein durchgehen von Tieren zur Straßenseite hin verhindert.

Die Durchgangssperre 5.5 ist als Einwege-Durchgangstür ausgebildet, könnte bei Bedarf aber auch als Zweiwege-Durchgangstür ausgebildet werden. Sie ist mittels Bändern 5.4 oder Bolzen 5.3 oder beidem am Rahmen, respektive den umgebenden Abschnitten der Sperrstäbe 1.3 fixiert und mit einer Durchtrittsperre seitlich oder unten am waagrechten Rahmen des Tier-Rettungsdurchschlupfs 5.0 durch einen Sperrbolzen 5.7 oder mittels Anschlag 5.8 am Rahmen gegen ein Zweiwege-Durchtritt gesichert. So kann Bewegung der Durchgangssperre 5.5 nur in Pfeilrichtung erfolgen.

Um die Akzeptanz aber auch die Störungsfreiheit am Durchtritt zugewähren, kann ist der obere Bereich am Tier-Rettungsdurchschlupf 5.0 vorgezogen sein und eine Überdachung 5.9 bilden. Durch diese Vorkehrung wird ein Vereisen der Scharniere und/oder derAufhängung der Durchgangssperre 5.5, respektive der Pendeltür bei Frost weitgehend verhindert. Verhindert wird dadurch auch ein Schneeauftrag vertikal beim Durchschlupf. Somit bleibt der vorgesehene Durchschlupf immer erkennbar.

## Patentansprüche

1. Artenschutzzaun (1.1) wie in Fig. 1 dargestellt, mit oder ohne Amphibien-Leitsystem (13).

2. Artenschutzzaun (1.1) nach Anspruch 1, **dadurch gekennzeichnet, dass**
der Artenschutzzaun (1.1) nur vertikale Sperrstäbe (1.3) aufweist, wobei bevorzugt zwei Sperrstäben (1.3) mit einem Abstand (a), der im Bereich von 35 bis 45 mm liegt, bevorzugt im Bereich von 40 bis 45 cm liegt, voneinander beanstandet sind.

3. Artenschutzzaun (1.1) nach Anspruch 1 oder 2, **dadurch gekennzeichnet, dass**
der Artenschutzzaun (1.1) mit Dufttaschen (1.2) ausgestattet ist.

4. Artenschutzzaun (1.1) nach Anspruch 2 oder 3, **dadurch gekennzeichnet, dass**
die Sperrstäbe (1.3) in Rund, Quadrat, Rechteck, Dreieck, Oval oder bei Winkelform gleichschenklig oder ungleichschenklig in einem geforderten Abstand untereinander aufgebaut werden können.

5. Artenschutzzaun (1.1) nach zumindest einem der vorstehenden Ansprüche **dadurch gekennzeichnet, dass**
der Artenschutzzaun (1.1) auf einem Amphibien-Leitsystem (13), das eine Mehrzahl von aneinander angereihten Leitsteinen (3.0) aufweist, angeordnet ist, insbesondere durch Verschraubungen, Verklebungen, Verdübelungen, mit oder ohne Muffen.

6. Artenschutzzaun (1.1) nach Anspruch 5,
**dadurch gekennzeichnet, dass**
die Leitsteine (3.0) aus Beton, Polymerbeton, Kunststoffen oder Metallen oder Kombinationen der vorstehenden Materialien geschaffen sind, und/oder
dass die Leitsteine (3.0) um Abstandhalter (4.0) voneinander beanstandet sind, wobei die Abstandhalter (4.0) aus Beton, Polymerbeton, Kunststoffen oder Metallen oder Kombinationen der vorstehenden Materialien geschaffen sind,
wobei bevorzugt zumindet eine Stirnseite eines Leitsteines (3.0) zumindest einen Abstandhalter (4.0) aufweist.

7. Artenschutzzaun (1.1) nach zumindest einem der Ansprüche 5 oder 6,
**dadurch gekennzeichnet, dass**
an zumindest einer Längsseite des Leitsteins (3.0) entlang dessen Länge, bevorzugt benachbart zu einer an der Erdoberfläche liegenden Kante (3.6) des Leitsteins (3.0) ein Pflanzenwachstumshinderungsvlies (3.2) bevorratet und ausziehbar angeordnet ist.

8. Artenschutzzaun (1.1) nach zumindest einem der Ansprüche 3 bis 7,
**dadurch gekennzeichnet, dass**
die Dufttaschen (1.2) an den Sperrstäben (1.3) und/oder an dem Rahmen (1.4) befestigt, insbesondere verschraubt oder verschweißt, oder lösbar befestigt, bevorzugt eingehängt sind, und
dass die Dufttaschen (1.2) mit Duftstoffträgern bestückbar sind, die abschreckenden Duftstoffe für vorbestimmte Tierarten aufweisen.

9. Artenschutzzaun (1.1) nach zumindest einem der Ansprüche 1 bis 8,
**dadurch gekennzeichnet, dass**
eine Greifvogelaufsitzstopp-Vorrichtung (2.0), auf dem Artenschutzzaun (1.1) angeordnet ist, die ein als eine Aufsitzfläche für Vögel gestaltetes, auf dem Artenschutzzaun 1.1 mittels einer entsprechenden Anzahl an Halterungen (2.3) um seine Längsachse drehbar gelagertes Element (2.1) aufweist.

10. Artenschutzzaun (1.1) nach Anspruch 9,
**dadurch gekennzeichnet, dass**
das drehbare Element (2.1) ein Rundrohr (2.1) oder ein Rohr mit auch dreieckigem-, ovalem-, quadratischem oder rechteckigem Querschnitt ist, und /oder dass
die Längsachse durch ein Spannseil (2.2), eine Kette, einen Stab gebildet wird.
